# EUROPÄISCHE PATENTANMELDUNG

(11) **EP 1 800 747 A1**
(43) Veröffentlichungstag der Anmeldung: **27.06.2007**
(21) Anmeldenummer: 06025905.8
(22) Anmeldetag: 14.12.2006
(51) Int. Cl.: B01J 31/24, C07F 9/50, C07F 15/00

(54) **Übergangsmetallkatalysatoren**

(30) Priorität: 23.12.2005 DE 102005062363
(71) Anmelder: Saltigo GmbH, 51369 Leverkusen (DE)
(72) Erfinder: Grützmacher, Hansjörg, Prof. Dr., 8157 Dielsdorf (CH); Piras, Elisabetta, Dr., 8057 Zürich (CH); Läng, Florian, Dr., 5507 Mellingen (CH)
(74) Vertreter: Pettrich, Klaus-Günter

(57) **Zusammenfassung**

Die vorliegende Erfindung betrifft stereoisomerenangereicherte Phosphorverbindungen der Formel (I) 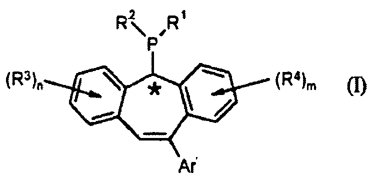 daraus herstellbare Übergangsmetallkatalysatoren und deren Anwendung in stereoselektiven katalytischen Prozessen, sowie ein Verfahren zur Herstellung der stereoisomerenangereicherten Phosphorverbindungen.

## Beschreibung

Die vorliegende Erfindung betrifft stereoisomerenangereicherte Phosphorverbindungen, daraus herstellbare Übergangsmetallkatalysatoren und deren Anwendung in stereoselektiven katalytischen Prozessen, sowie ein Verfahren zur Herstellung der stereoisomerenangereicherten Phosphorverbindungen.

Aus WO 2003048175 ist bekannt, dass Übergangsmetallkomplexe von Olefin-Phosphanverbindungen für homogenkatalytische Reaktionen wie insbesondere Hydrierungen und Hydrogenierungen geeignet sind. Die Herstellung solcher Olefin-Phosphanverbindungen erfolgt üblicherweise unter Verwendung von sekundären Phosphanen (siehe auch Thomaier et al., New. J. Chem. 1998, 947-958 und Deblon et al., New. J. Chem. 2001, 25, 83-92). Alternativ ist die Herstellung über Phosphanoxide aus EP 1 475 384 A möglich (EP 1 475 384 A).

Der Vorteil der vorgenannten Olefm-Phosphanverbindungen ist ihre gute Modifizierbarkeit in elektronischer und sterischer Hinsicht, weshalb das Bedürfnis bestand, besonders geeignete Katalysatoren bereitzustellen, die die enantioselektive Herstellung von organischen Verbindungen in effizienter Weise ermöglicht.

Überraschenderweise wurden nun gefunden, dass enantiomerenangereicherte Verbindungen der Formel (I) als Liganden besonders geeignet sind, wobei in der Formel (I) 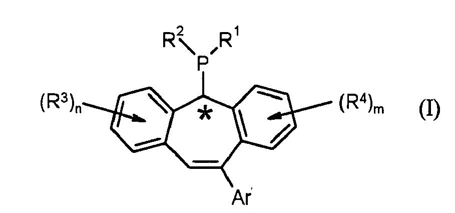
- R¹ und R²: jeweils unabhängig voneinander für einen monovalenten Rest stehen der jeweils 1 bis 30-Kohlenstoffatome enthält oder
- PR¹R²: zusammen für einen 5 bis 9 gliedrigen heterocyclischen Rest steht, der insgesamt 2 bis 50 Kohlenstoffatome enthält und bis zu drei weitere Heteroatome enthalten kann, die ausgewählt sind aus der Gruppe Sauerstoff und Stickstoff und
- n und m: die Zahl der Substituenten am aromatischen Ring anzeigt, die von Wasserstoff verschieden sind und jeweils unabhängig voneinander stehen können für null, eins, zwei, drei oder vier,
- R³und R⁴: jeweils unabhängig ausgewählt sind aus der Gruppe
Fluor, Chlor, Brom, Iod, Nitro, freies oder geschütztes Formyl, C₁-C₁₂-Alkyl, C₁-C₁₂-Alkoxy, C₁-C₁₂-Halogenalkoxy, C₁-C₁₂-Halogenalkyl, C₅-C₁₄-Aryl, C₆-C₁₅-Arylalkyl oder Resten der Formel (II),

A-B-C-D (II)
in der unabhängig voneinander
- A: fehlt oder für einen Alkylenrest mit 1 bis 12 Kohlenstoffatomen oder einen Alkenylenrest mit 2 bis 12 Kohlenstoffatomen steht und
- B: fehlt oder für Sauerstoff, Schwefel oder NR⁵ steht,
wobei
- R⁵: Wasserstoff, C₁-C₈-Alkyl, C₆-C₁₅-Arylalkyl oder C₅-C₁₄-Aryl bedeutet und
- C: für eine Carbonyl-Gruppe steht und
- D: für R⁶, OR⁶, NHR⁷ oder N(R⁷)₂ steht,
wobei
- R⁶: für C₁-C₈-Alkyl, C₆-C₁₅-Arylakyl oder C₅-C₁₄-Aryl und
- R⁷: jeweils unabhängig für C₁-C₈-Alkyl, C₆-C₁₄-Arylalkyl oder C₅-C₁₄-Aryl oder N(R⁷)₂ zusammen für einen 5 oder 6 gliedrigen cyclischen Aminorest steht
oder Resten der Formeln (IIIa-g)
A-D (IIIa) A-SO₂-D (IIIb) A-NR⁶-SO₂R⁶ (IIIc) A-SO₃Z (IIId) A-PO₃Z₂ (IIIe) A-COZ (IIIf) A-CN (IIIg)
in denen A, D und R⁶ die unter der Formel (II) angegebene Bedeutung besitzen und Z für Wasserstoff oder ein Metallionen-äquivalent steht
- Ar: für einen Arylrest steht und
- *: unabhängig von der oben gewählten Darstellung kennzeichnet, dass es sich um alle jeweils möglichen stereoisomerenangereicherten Verbindungen handelt.

Die Begriffe stereoisomerenangereichert (enantiomerenangereichert bzw. diastereomerenangereichert) bedeuten im Rahmen der Erfindung stereoisomerenreine (enantiomerenreine bzw. diastereomerenreine) Verbindungen oder Mischungen von Stereoisomeren (Enantiomeren bzw. Diastereomeren), in denen ein Stereoisomeres (Enantiomeres bzw. Diastereomeres) in einem größeren Anteil vorliegt als ein anderes bzw. das andere.

Für Verbindungen der Formel (I) bedeutet beispielsweise und bevorzugt stereoisomerenangereichert einen Gehalt eines Stereoisomeren von 50 % bis 100 %, besonders bevorzugt 70 % bis 100 % und ganz besonders bevorzugt 95 bis 100 %.

Besonders bevorzugte stereoisomerenangereicherte Verbindungen sind enantiomerenangereicherte Verbindungen.

Unter asymmetrischen katalytischen Prozessen sind im Rahmen der Erfindung Synthesen von chiralen Verbindungen zu verstehen, die in Gegenwart von Katalysatoren stattfinden und wobei die Produkte stereoisomerenangereichert gebildet werden.

Es sei an dieser Stelle darauf hingewiesen, dass vom Rahmen der Erfindung für Verbindungen der Formel (I) beliebige Kombinationen der im Folgenden genannten Vorzugsbereiche mitumfasst sind.

Aryl steht allgemein jeweils unabhängig für einen heteroaromatischen Rest mit 5 bis 14 Gerüstkohlenstoffatomen, in denen keines, ein, zwei, drei oder vier Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, oder für einen carbocyclischen aromatischen Rest mit 6 bis 14 Gerüstkohlenstoffatomen. Es sei angemerkt, dass im Rahmen dieser Erfindung zur Vereinfachung auch Heteroatome als Gerüstkohlenstoffatome gezählt werden. In diesem Sinne ist demnach Pyridin beispielsweise ein C₆-Aryl-Rest.

Beispiele für mono-, bi- oder tricyclische carbocyclische aromatische Reste mit 6 bis 14 Gerüstkohlenstoffatomen sind zum Beispiel Phenyl, Biphenyl, Naphtyl, Phenanthrenyl, Anthracenyl oder Fluorenyl; mono-, bi- oder tricyclische heteroaromatische Reste mit 5 bis 14 Gerüstkohlenstoffatomen in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyrrolyl, Pyrrolidinyl, Pyridinyl, Pyrimidinyl, Imidazolyl, Oxazolyl, Benzofuranyl, Triazolyl, Tetrazolyl, Furan-yl, Thiophen-yl, Dibenzofuran-yl, Indolyl oder Chinolinyl.

Weiterhin kann der carbocyclische aromatische Rest oder heteroaromatische Rest mit bis zu fünf gleichen oder verschiedenen Substituenten pro Cyclus substituiert sein, die ausgewählt sind aus der Gruppe Hydroxy, Chlor, Fluor, Iod, Brom, Cyano, Nitro, Nitroso, Tri(C₁-C₈-alkyl)siloxyl oder Resten der Formeln (II) und (IIIa) bis (IIIg).

Analog gelten die Definition und die Vorzugsbereiche im Rahmen der Erfindung auch für Aryloxy-Substituenten und den Arylteil eines Arylalkyl-Restes.

Geschütztes Formyl bedeutet einen Formyl-Rest, der durch Überführung in ein Aminal, Acetal oder ein gemischtes Aminalacetal geschützt ist, wobei die Aminale, Acetale und gemischten Aminalacetale acyclisch oder cyclisch sein können.

Beispielsweise und bevorzugt steht geschütztes Formyl für einen 1,1-(2,4-Dioxycyclopentandiyl)-Rest.

Alkyl bzw. Alkylen, bzw. Alkoxy bzw. Alkenyl, steht im Rahmen der Erfindung jeweils unabhängig einen geradkettigen, cyclischen, verzweigten oder unverzweigten Alkyl- bzw. Alkylen- bzw. Alkenyl- bzw. Alkoxy-Rest, der gegebenenfalls durch C₁-C₄-Alkoxy in der Art weiter substituiert sein kann, dass jedes Kohlenstoffatom des Alkyl- bzw. Alkylen-, bzw. Alkoxy bzw. Alkenyl-Restes höchstens ein Heteroatom ausgewählt aus der Gruppe Sauerstoff, Stickstoff oder Schwefel trägt.

Gleiches gilt für den Alkylenteil eines Arylalkyl-Restes.

Beispielsweise steht im Rahmen der Erfindung C₁-C₆-Alkyl für Methyl, Ethyl, 2-Ethoxyethyl, n-Propyl, Isopropyl, n-Butyl, tert.-Butyl, n-Pentyl, Cyclohexyl und n-Hexyl, C₁-C₈-Alkyl darüber hinaus beispielsweise für n-Heptyl, n-Octyl oder iso-Octyl, C₁-C₁₂-Alkyl, weiter darüber hinaus z.B. für Norbomyl, Adamantyl, n-Decyl und n-Dodecyl und C₁-C₁₈-Alkyl noch weiter darüber hinaus für n-Hexadecyl und n-Octadecyl.

Beispielsweise steht im Rahmen der Erfmdung C₁-C₄-Alkylen für Methylen, 1,1-Ethylen, 1,2-Ethylen, 1,1-Propylen, 1,2-Propylen, 1,3-Propylen, 1,1-Butylen, 1,2-Butylen, 2,3-Butylen und 1,4-Butylen, C₁-C₈-Alkylen darüber hinaus für 1,5-Pentylen, 1,6-Hexylen, 1,1-Cyclohexylen, 1,4-Cyclohexylen, 1,2-Cyclohexylen und 1,8-Octylen.

Beispielsweise steht im Rahmen der Erfindung C₁-C₄-Alkoxy für Methoxy, Ethoxy, Isopropoxy, n-Propoxy, n-Butoxy und tert.-Butoxy, C₁-C₈-Alkoxy darüber hinaus für Cyclohexyloxy.

Beispielsweise steht im Rahmen der Erfindung C₂-C₈-Alkenyl für Allyl, 3-Propenyl und 4-Butenyl.

Halogenalkyl bzw. Halogenalkoxy, steht im Rahmen der Erfindung jeweils unabhängig einen geradkettigen, cyclischen, verzweigten oder unverzweigten Alkyl- bzw. Alkoxy-Rest, der durch Halogenatome einfach, mehrfach oder vollständig substituiert ist. Reste die vollständig durch Fluor substituiert sind, werden mit Perfluoralkyl bzw. Perfluoralkoxy bezeichnet.

Beispielsweise steht im Rahmen der Erfindung C₁-C₆-Halogenalkyl für Trifluormethyl, 2,2,2-Trifluorethyl, Chlormethyl, Fluormethyl, Brommethyl, 2-Bromethyl, 2-Chlorethyl, Nonafluorbutyl, C₁-C₈-Halogenalkyl darüber hinaus beispielsweise für n-Perfluoroctyl, C₁-C₁₂-Halogenalkyl, weiter darüber hinaus z.B. für n-Perfluordodecyl.

Beispielsweise steht im Rahmen der Erfindung C1-C4-Halogenalkoxy für Trifluormethoxy, 2,2,2-Trifluoretlioxy, 2-Chlorethoxy, Heptafluorisopropoxy, C1-C8-Halogenalkoxy darüber hinaus für n-Perfluoroctyloxy.

Im Folgenden werden die bevorzugten Substitutionsmuster definiert:
- R¹ und R²: stehen bevorzugt jeweils unabhängig voneinander für C₁-C₁₈-Akyl, C₃-C₁₂-Alkenyl, C₆-C₂₄-Aryl.
- R¹ und R²: stehen besonders bevorzugt jeweils unabhängig voneinander für C₁-C₁₂-Alkyl oder C₆-C₁₄-Aryl.
- R¹ und R²: stehen ganz besonders bevorzugt jeweils unabhängig voneinander und noch weiter bevorzugt jeweils identisch für Isopropyl, tert.-Butyl, Cyclohexyl, Benzyl, o-, m-, p-Tolyl, 2,6-Dimethylphenyl, 3,5-Di-tert.-butylphenyl, p-Trifluormethylphenyl, 3,5-Bis(trifluormethylphenyl), p-tert.-Butylphenyl, o-, m-, p-Anisyl, oder 2,6-Dimethoxyphenyl und noch weiter bevorzugt für Phenyl.
- n und m: stehen bevorzugt identisch für 0 oder 1.
- Ar: steht besonders bevorzugt für Phenyl, das mit keinem einem oder zwei Substituenten weiter substituiert ist, die ausgewählt sind aus der Gruppe C₁-C₄ Alkyl.

Ganz besonders bevorzugte Verbindungen der Formel (I) sind:
(S)- und (R)-10-Phenyl-5-diphenylphosphanyl-5*H*-dibenzo[a,d]cyclohepten (S^{-Ph}tropp^{Ph}, R-^{Ph}tropp^{Ph}), (S)- und (R)-10-Phenyl-5-di(o-tolyl)phosphanyl-5*H*-dibenzo[a,d]cyclohepten (S-^{Ph}ropp^{o- Tol}, R-^{Ph}tropp^{o-Tol}), (S)- und (R)-10-Phenyl-5-di(m-tolyl)phosphanyl-5*H*-dibenzo[a,d]cyclohepten (S-^{Ph}tropp^{m-Tol} R-^{Ph}tropp^{m-Tol}) und (S)- und (R)-10-Phenyl-5-di(p-tolyl)phosphanyl-5H-dibenzo[a,d]cyclohepten (S-^{Ph}tropp^{p-Tol} R-^{Ph}tropp^{p-Tol}) wobei (S)- und (R)-10-Phenyl-5-diphenylphosphanyl-5*H*-dibenzo[a,d]cyclohepten (S-^{Ph}tropp^{Ph}, R-^{Ph}tropp^{ph}) noch weiter bevorzugt sind.

Von der Erfindung ist weiterhin ein Verfahren zur Herstellung von Verbindungen der Formel (I) umfasst, das dadurch gekennzeichnet ist, dass
- in einem Schritt a)
   Verbindungen der Formel (IV) 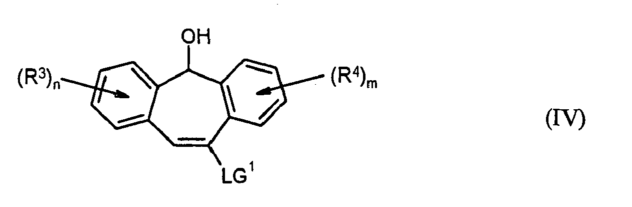 in der R³ und R⁴ sowie n und m die vorstehend genannte Bedeutung besitzen und LG¹ für Halogen, Perfluorcarboxyl oder ein organisches Sulfonat steht mit Verbindungen der Formel (V)

   Ar-LG² (V)

   in der Ar für einen Aryl-Rest steht und LG² für Halogen, Perfluorcarboxyl, B(OH)₂ oder ein organisches Sulfonat steht
   in Gegenwart von Katalysator in Verbindungen der Formel (VI) überführt werden 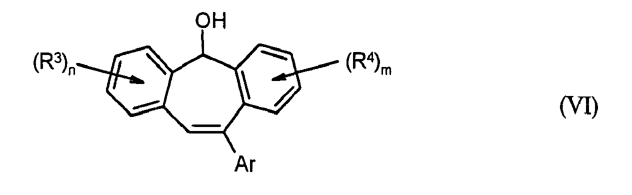
- in einem Schritt b) die Verbindungen der Formel (VI) durch Umsetzung mit Verbindungen der Formel (VII)

   R¹R²PHal (VII)

   in der R¹ und R² die vorstehend angegebene Bedeutung besitzen und Hal für Chlor, Brom oder Iod, bevorzugt für Chlor steht
   in Gegenwart von Säure zu Verbindungen der Formel (VIII) umgesetzt werden 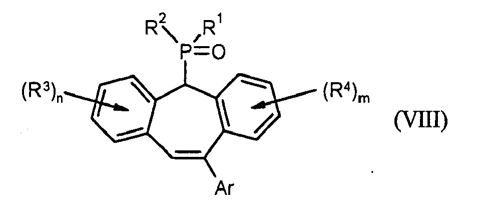
- in einem Schritt c) die Verbindungen der Formel (VIII) durch Chromatographie in stereoisomerenangereichterte Verbindungen der Formel (VIII) überführt werden und
- in einem Schritt d) die stereoisomerenangereichterten Verbindungen der Formel (VIII) durch Reduktion in Verbindungen der Formel (I) überführt werden.

Gemäß Schritt a) des erfindungsgemäßen Verfahrens werden die Verbindungen der Formel (IV) mit Verbindungen der Formel (V) in Gegenwart von Katalysator zu Verbindungen der Formel (VI) umgesetzt. Die Reaktion kann gegebenenfalls und bevorzugt in Gegenwart von organischem Lösungsmittel durchgeführt werden. Als Katalysatoren eignen sich insbesondere solche, die für Reaktionen des Heck- oder Suzuki-Typs einsetzbar sind wie beispielsweise Palladium-Koplexe. In einer bevorzugten Ausführungsform wird Schritt a) so durchgeführt dass Verbindungen der Formel (IV) mit Arylboronsäuren der Formel (V) in Gegenwart von Tetrakis(triphenylphosphin)palladium und einem Alkalimetallcarbonat umgesetzt werden.

Gemäß Schritt b) des erfindungsgemäßen Verfahrens werden die Verbindungen der Formel (VI) mit Verbindungen der Formel (VII) in Gegenwart von Säure zu Verbindungen der Formel (VIII) umgesetzt. Die Reaktion kann gegebenenfalls und bevorzugt in Gegenwart von organischem Lösungsmittel durchgeführt werden, sofern die Lösungsmittel gegen die jeweils eingesetzte Säure zumindest im Wesentlichen inert sind.

Als organische Lösungsmittel sind beispielsweise geeignet:
Aliphatische oder aromatische, gegebenenfalls halogenierte Kohlenwasserstoffe, wie beispielsweise verschiedene Benzine, Benzol, Toluol, Xylol, Chlorbenzol, Dichlorbenzol, verschiedene Petrolether, Hexan, Cyclohexan, Dichlormethan, Chloroform, Tetrachlorkohlenstoff; Ether, wie Diethylether, Methyl-tert.-butylether, Diisopropylether, Dioxan, Tetrahydrofuran oder Ethylenglykoldimethyl- oder -diethylether; Amide, wie N,N-Dimethylformamid, N,N-Dimethylacetamid, N-Methyl-formanilid, N-Methyl-pyrrolidon, N-Methylcaprolactam oder Hexamethylphosphorsäuretriamid; Sulfoxide, wie Dimethylsulfoxid, Sulfone wie Tetramethylensulfon, Alkohole, wie Methanol, Ethanol, n- oder i-Propanol, Ethylenglykolmonomethylether, Ethylenglykolmonoethylether, Diethylenglykolmonomethylether, Diethylenglykolmonoethylether, oder Gemische solcher organischen Lösungsmittel. Bevorzugte organische Lösungsmittel sind Ether.

Bevorzugte Säuren sind solche, die bezogen auf eine wässrige Bezugsskala und 25°C einen pKs-Wert von 5,5 oder weniger besitzen.

Dies sind beispielsweise (C₁-C₁₂-Alkyl)carbonsäuren, (C₁-C₁₂-Halogenalkyl)carbonsäuren, (C₁-C₁₂-Halogenalkyl)sulfonsäuren, (C₁-C₁₂-Alkyl)sulfonsäuren, (C₅-C₁₄-Aryl)sulfonsäuren, Chlorwasserstoff, Bromwasserstoff und Iodwasserstoff, gegebenenfalls gelöst in Essigsäure, Schwefelsäure, ortho- und Polyphosphorsäuren, Hexafluorophosphorsäure und Tetrafluoroborsäure.

Gemäß Schritt c) des erfindungsgemäßen Verfahrens erfolgt die Trennung von Stereoisomeren. Bei Diastereomerengemischen kann die Trennung beispielsweise chromatographisch oder durch fraktionierte Kristallisation erfolgen, bei Enantiomerengemischen beispielsweise durch fraktionierte Kristallisation in Gegenwart eines enantiomerenangereicherten Hilfsreagenzes oder durch Chromatographie an einem zumindest enantiomerenangereicherten Säulenmaterial.

Gemäß Schritt d) des erfindungsgemäßen Verfahrens erfolgt die Reduktion von stereoisomerenangereicherten Verbindungen der Formel (VIII) zu Verbindungen der Formel (I). Vorzugsweise erfolgt diese Reduktion in Gegenwart von Siliziumwasserstoffverbindungen. Bevorzugte Siliziumwasserstoffverbindungen sind Polymethylhydrosiloxan (PHMS) oder solche der Formel (IX),

(R⁸)ₓSiH₍₄₋ₓ₎ (IX)

in der
- x: für 0, 1, 2 oder 3 steht und
- R⁸: jeweils unabhängig für C₁-C₈-Alkyl, C₁-C₈-Alkoxy, C₅-C₁₄-Aryl oder Chlor steht, wobei Trichlorsilan noch weiter bevorzugt ist.

Die erfindungsgemäß herstellbaren Verbindungen der Formel (I) eignen sich insbesondere zur Anwendung als Liganden asymmetrischen katalytischen Prozessen.

Vom Umfang der Erfindung ist daher auch ein Verfahren zur Herstellung stereoisomerenangereicherter chiraler Verbindungen umfasst, das dadurch gekennzeichnet ist, das es in Gegenwart von Verbindungen der Formel (I) durchgeführt wird.

Für den Einsatz in asymmetrischen katalytischen Prozessen eignen sich als Katalysatoren insbesondere solche, die isolierte Übergangsmetallkomplexe der Verbindungen der Formel (I) enthalten und weiterhin solche, die Übergangsmetallkomplexe enthalten, die im Reaktionsmedium aus Übergangsmetallverbindungen und Verbindungen der Formel (I) erzeugt werden. Die genannten Katalysatoren sind ebenfalls vom Rahmen der Erfindung umfasst. Die beschriebenen Übergangsmetallkomplexe können gegebenenfalls in Form von Isomeren wie zum Beispiel cis/trans-Isomeren, Koordinationsisonieren oder Solvatationsisomeren vorliegen. Solche Isomere sind von der Erfindung ebenfalls umfasst.

Bevorzugte Übergangsmetallkomplexe sind solche, die mindestens ein Übergangsmetall ausgewählt aus der Gruppe Kobalt, Rhodium, Iridium, Nickel, Palladium, Platin, Kupfer, Osmium und Ruthenium und mindestens eine Verbindung der Formel (I) enthalten.

Bevorzugte Übergangsmetalle sind ausgewählt aus der Gruppe Rhodium, Iridium, Nickel, Palladium und Ruthenium, besonders bevorzugte Übergangsmetalle sind ausgewählt aus der Gruppe Iridium und Rhodium.

Geeignete Übergangsmetallverbindungen aus denen mit Verbindungen der Formel (I) erfindungsgexnäße Übergangsmetallkomplexe hergestellt werden können sind beispielsweise solche der Formel (Xa)

M¹(Y¹)ₚ (Xa)

in der
- M¹: für Ruthenium, Rhodium, Iridium, Nickel, Palladium, Platin oder Kupfer und
- Y¹: für Chlorid, Bromid, Acetat, Nitrat, Methansulfonat, Trifluormethansulfonat Allyl, Metallyl oder Acetylacetonat und
- p: für Ruthenium, Rhodium und Iridium für 3, für
Nickel, Palladium und Platin für 2 und für
Kupfer für 1 steht,
oder solche der Formel (Xb),

M²(Y²)ₚB¹₂ (Xb)

in der
- M²: für Ruthenium, Rhodium, Iridium, Nickel, Palladium, Platin oder Kupfer und
- Y²: für Hydroxy, Chlorid, Bromid, Acetat, Methansulfonat, Trifluormethansulfonat, Tetra-fluoroborat, Hexafluorophosphat Perchlorat, Hexafluoroantimonat, Tetra(bis-3,5-trifluormethylphenyl)borat oder Tetraphenylborat steht und
- p: für Rhodium und Iridium für 1, für
Nickel, Palladium, Platin und Ruthenium für 2 und für
Kupfer für 1 steht,
- B¹: jeweils für ein C₂-C₁₂-Alken wie beispielsweise Ethylen oder Cycloocten, oder ein Nitril wie beispielsweise Acetonitril, Benzonitril oder Benzylnitril steht, oder
- B¹₂: zusammen für ein (C₄-C₁₂)-Dien wie beispielsweise Norbomadien oder 1,5-Cyclooctadien steht
oder solche der Formel (Xc),

[M³B²Y¹₂]₂ (Xc)

in der
- M³: für Ruthenium und
- B²: für Arylreste wie zum Beispiel Cymol, Mesityl, Phenyl oder Cyclooctadien, Norbornadien oder Methylallyl steht
oder solche der Formel (Xd)

M⁴ₚ[M⁵(Y³)₄] (Xd),

wobei
- M⁴: für Palladium, Nickel, Iridium oder Rhodium und
- Y³: für Chlorid oder Bromid steht und
- M⁵: für Lithium, Natrium, Kalium, Ammonium oder organisches Ammonium steht und
- p: für Rhodium und Iridium für 3, für Nickel, Palladium und Platin für 2 steht,
oder solche der Formel (Xe)

[M⁶(B³)₂]An (Xe),

wobei
- M⁶: für Iridium oder Rhodium und
- B³: für ein (C₄-C₁₂)-Dien wie beispielsweise Norbomadien oder 1,5-Cyclooctadien steht und
- An: für ein nicht oder schwach koordinierendes Anion wie zum Beispiel Methansulfonat, Trifluormethansulfonat (OTf), Tetrafluoroborat, Hexafluoro-phosphat Perchlorat, Hexafluoroantimonat, Tetra(bis-3,5-trifluormethylphenyl)boran, Tetraphenylborat oder ein Closo-boranat oder ein Carboboranat steht.

Darüber hinaus sind als Übergangsmetallverbindungen beispielsweise Ni(1,5-Cyclooctadien)₂, Pd₂(dibenzylidenaceton)₃, Pt(norbornen)₃, Ir(pyridin)₂(1,5-Cyclooctadien), [Cu(CH₃CN)₄]BF₄ und [Cu(CH₃CN)₄]PF₆ oder mehrkernige verbrückte Komplexe wie beispielsweise [Rh(1,5-cyclooctadien)Cl]₂, [Rh(1,5-cyclooctadien)OH]₂und [Rh(1,5-cyclooctadien)Br]₂, [Rh(Ethen)₂Cl]₂, [Rh(Cycloocten)₂Cl]₂ oder die analogen Iridiumverbindungen geeignet.

Bevorzugt werden als Metallverbindungen eingesetzt:
[Rh₂(*µ*₂-Cl)₂(CO)₄], [Ir₂(*µ*₂-Cl)₂(CO)₄], [Ir₂(*µ*₂-Cl)₂(coe)₄], [Rh₂(*µ*₂-Cl)₂(coe)₄], [Rh₂(µ₂-Cl)₂(C₂H₄)₄], [Ir₂(*µ*₂-Cl)₂(C₂H₄)₄] [Rh(cod)Cl]₂, [Rh(cod)OH]₂, [Rh(cod)₂Br], [Rh(cod)₂]ClO₄, [Rh(cod)₂]BF₄, [Rh(cod)₂]PF₆, [Rh(cod)₂]OTf, [Rh(cod)₂]BAr₄ (Ar = 3,5-bistrifluormethylphenyl) [Rh(cod)₂]SbF₆, [Ir(cod)Cl]₂, [Ir(cod)OH]₂, [Ir(cod)₂Br], [Ir(cod)₂]ClO₄, [Ir(cod)₂]BF₄, [Ir(cod)₂]PF₆, [Ir (cod)₂]OTf, [Ir(cod)₂]BAr₄ (Ar = 3,5-bistrifluormethylphenyl) [Ir(cod)₂]SbF₆, [Rh(nbd)CI]₂,(nbd = norbomadien) [Rh(nbd)₂Br], [Rh(nbd)₂]ClO₄, [Rh(nbd)₂]BF₄, [Rh(nbd)₂]PF₆, [Rh(nbd)₂]OTf, [Rh(nbd)₂]BAr₄ (Ar = 3,5-bistrifluormethylphenyl) [Rh(nbd)₂]SbF₆ RuCl₂(nbd), [Ir(nbd)₂]PF₆, [Ir(nbd)₂]ClO₄, [Ir(nbd)₂]SbF₆ [Ir(nbd)₂]BF₄, [Ir(nbd)₂]OTf, [Ir(nbd)₂]BAr₄ (Ar = 3,5-bistrifluormethylphenyl) und Ir(pyridin)₂(nbd).

Die molare Menge des Übergangsmetalls in der eingesetzten Übergangsmetallverbindung kann beispielsweise 50 bis 300 mol-% bezogen auf die eingesetzte Verbindung der Formel (I) betragen, bei Verwendung von isolierten Übergangsmetallkomplexen der Verbindungen der formel (I) beträgt das verhältnis von Übergangsmetall zu Verbindungen der Formel (I) vorzugsweise eins zu eins oder eins zu zwei.

Als besonders bevorzugte isolierte Komplexe seien genannt:
*S,S-* und *R*,*R*-[Ir(^{Ph}tropp^{Ph})₂]OTf, *S-* und *R*-[Rh(cod)(^{Ph}tropp^{Ph})]OTf, *S-* und *R*-[ Rh(MeCN)₂(^{Ph}tropp^{Ph})]PF₆ und *S*- und *R*-[RhCl(MeCN)(^{Ph}tropp^{Ph})].

Die erfindungsgemäßen Katalysatoren eignen sich insbesondere für den Einsatz in einem Verfahren zur Herstellung von stereoisomerenangereicherten Verbindungen.

Bevorzugte Verfahren zur Herstellung von stereoisomerenangereicherten Verbindungen sind dabei asymmetrische 1,4-Addionen wie insbesondere die Kupplung von Arylboronsäuren an α,β-ungesättigte Ketone und α,β-ungesättigte Carbonsäurederivate sowie asymmetrische Hydrierungen, insbesondere von α,β-ungesättigten Carbonsäurederivaten.

Die nachstehenden Beispiele erläutern die vorteilhaften Effekte der Erfindung.

### Beispiele

### Beispiel 1: Synthese von 10-Phenyl-5H-dibenzo[a,d]cyclohepten-5-ol (^{Ph}tropOH)

Ein 250-mL Kolben wurde mit 10-Broml-5*H*-dibenzo[*a*,*d*]cyclohepten-5-ol (4.0 g, 13.9 mmol) und 100 mL Dimethoxyethan versetzt. Zu dieser Lösung wurden Pd(OAc)₂ (93 mg, 0.4 mmol), Ph₃P (349 mg, 1.3 mmol), eine entgaste Lösung von Na₂CO₃ (9 ml, 2 M), und PhB(OH)₂ (2.0 g, 16.6 mmol) zugegeben und die Mischung 18 h unter Rückfluss erhitzt. Nach Zugabe von 30 mL H₂O wurde das Produkt mit Essigsäureeethylester (3 x 30 mL) extrahiert, die vereinigten organischen Phasen über Na₂S0₄getrocknet, filtriert und von flüchtigen Verbindungen befreit. Der resultierende Rückstand wurde durch Chromatographie gereinigt (Laufmittel AcOEt / *n*-Hexan 2/8). Ausbeute: 3.9 g (97%).

¹³C-NMR (75.5 MHz, CDCl₃): δ= 70.9 (br, *C*H_{benz}), 120.9 (br, 2 C, *C*Hₐᵣ), 125.9 (br, *C*Hₐᵣ), 126.1 (br, 1C, *C*Hₐᵣ), 127.72 (*C*Hₐᵣ), 127.9 (br, *C*Hₐᵣ), 128.34 (*C*Hₐᵣ), 128.45 (*C*Hₐᵣ), 128.92 (*C*Hₐᵣ), 129.1 (br, *C*Hₐᵣ), 129.97 (br, 2C, *C*Hₐᵣ), 132.4 (br, *C*_{quat}), 133.6 (br, *C*_{quat}), 141.8 (br, *C*_{quat}), 142.6 (br, *C*_{quat}), 143.3 (br, *C*_{quat}), 143.57 (*C*_{quat}).

### Beispiel 2: Synthese von R- und S-(5-Diphenyloxophosphoranyl-10-phenyl-dibenzo-[a,d]-cyclohepten) (^{Ph}troppo^{Ph})

520 mg 5-Hydroxy-10-phenyl-dibenzo[a,d]cyclohepten (1,8 mmol) in 15 mL CH₂Cl₂ wurden mit 0,15 mL CF₃COOH (1,13 mmol) versetzt. Die Lösung färbte sich rot und es wurden 0,33 mL Chlorodiphenylphosphan (2,26 mmol) zugegeben. Zu der Reaktionsmischung gab man anschließend nochmals 0,15 mL CF₃COOH (1,13 mmol). Es entstand eine klare gelbe Lösung, die 2 h bei Raumtemperatur gerührt wurde. Anschließend wurden 20 mL Na₂C0₃ (18 % in H₂O) zugegeben. Die organische Phase wurde abgetrennt und die wässrige Phase jeweils 3 x mit 20 mL CH₂Cl₂ extrahiert. Die vereinigten organischen Phasen wurden über MgSO₄ getrocknet und nachfolgend das Lösungsmittel verdampft. Es wurde das racemische Produkt erhalten (660 mg, 80 %). Die beiden Enantiomere wurden anschließend durch präparative HPLC (Säulenmaterial OD-H [Cellulose-Triphenylcarbamat] mit einer Mischung von *n*-Hexan / Iso-propanol 98/2 (Vol.-%) als Laufmittel getrennt:

Retentionszeiten: *R*-Isomer: 8.0 min., [α]_{D} = -27.8, *S*-Isomer: 10.4 min., [α]_{D} = 20.9. Schmelzpunkt: 95 - 100 °C, ³¹P NMR: 27,3 ppm - ¹H NMR: 5,15 (d, ²JPH = 13 Hz, 1 H , CHP), 6,50 (s, 1 H, = CH), 7,0 - 7,9 (m, 23 H, Hₐᵣₒₘ).

### Beispiel 3: Synthese von S-5-Diphenylphosphanyl-10-phenyl-dibenzo[a,d]-cyclo-hepten (S-^{Ph}tropp^{Ph})

2.0 g S-(5-Diphenyloxophosphoranyl-10-phenyl-dibenzo[a,d]cyclohepten) (4.3 mmol) wurden in 100 mL Toluol gelöst und 11,5 g SiHCl₃ (85 mmol) zugegeben. Die Reaktionsmischung wurde 18 h auf 90°C erhitzt. Nach Abkühlen wurden 70 mL 20 % deoxygenierte NaOH unter Kühlung zugegeben. Die organische Phase wurde abgetrennt und über MgSO₄ getrocknet. Nach Abziehen aller flüchtigen Komponenten und nach Umkristallisieren aus Methylenchlorid erhielt man das Produkt (1.75 g, 90 %) im Form farbloser Kristalle.

³¹P NMR (CDCl₃):- 13,1 ppm - ¹H NMR: 4,99 (d, ²Jp_{H} = 6 Hz, 1 H, CHP), 6,90 (d, J_{PH} = 6 Hz, 1 H, = CH), 7,0 - 7,53 (m, 23 H, Harom).

### Beispiel 4: Synthese von [Rh(cod)(S-^{Ph}tropp^{Ph})]OTf

Eine Lösung von [Rh(cod)₂]OTf (0.08 g, 0.17 mmol) in 2 mL CH₂Cl₂ wurde tropfenweise zu einer Lösung S-^{Ph}tropp^{Ph} (0.08g, 0.17 mmol) in 1 mL CH₂Cl₂ gegeben. Die rote Lösung wurde für 30 Minuten gerührt und die Lösung anschließend bis zur Trockne eingeengt. Der rote Feststoff wurde in wenig Dichlormethan gelöst und die Lösung mit Hexan überschichtet. Nach 18 h wurden 0.13 g rote Kristalle erhalten (Ausbeute 90%).

³¹P-NMR (121.5 MHz, CDCl₃): δ. =79.1 (d, ¹J_{RhP}=163.2)

¹⁰³Rh-NMR (12.6 MHz, CDCl₃): δ.= 377.1 (d, ¹*J*_{RhP}=163.2).

### Beispiel 5: Synthese von [Rh(CH₃CN)₂(S-^{Ph}tropp^{Ph})]PF₆

Ein 10-mL Schlenk-Kolben wurde mit [Rh₂(*µ*₂-Cl)₂(CO)₄] (40 mg, 0.10 mmol), S-^{Ph}tropp^{Ph} (93 mg, 0.20 mmol), TIPF₆ (72 mg, 0.20 mmol), und 3 mL CH₃CN versetzt. Es wurde unmittelbar die Freisetzung von CO und die Ausfällung von TICl beobachtet. Die orange Suspension wurde über Celite gefiltert und das Filtrat unter vermindertem Druck bis zur Trockne eingeengt. Man erhielt 156 mg (95% d.Th.) des gewünschten Produktes.

³¹P-NMR (121.5 MHz, CD₃CN): δ.=-144.4 (sept, ¹*J*_{PF}=706.5, 1 P, PF₆) 93.8 (d, ¹*J*_{RhP}=158.2).

¹⁰³Rh-NMR (12.6 MHz, CD₃CN): δ. =596.2 (dd, ¹*J*_{RhP}=158.2, ²*J*_{RhH}=2.9).

### Beispiel 6: Synthese von [Rh₂(µ₂-Cl)₂(S^{-Ph}tropp^{Ph})₂] and [RhCl(MeCN)(S-^{Ph}tropp^{ph})]

Eine Mischung von [Rh₂(□₂-Cl)₂(C₂H₄)₄] (9 mg, 23 □mol) und S-^{Ph}tropp^{Ph} (21 mg, 46 □mol) in 1 ml THF wurde für 1 h bei Raumtemperatur gerührt. Das Lösungsmittel wurde entfernt und [Rh₂(□₂-Cl)₂(^{Ph}tropp^{Ph})₂] wurde aus Methylenchlorid und Hexan als oranges Pulver gefällt. (25 mg, 93 %). Das NMR-Spektrum wurde in CD₃CN aufgenommen, was zur Bildung von [RhCl(CD₃CN)(^{Ph}tropp^{Ph})] führte.

³¹P-NMR (121.5 MHz, CDCl₃, 5% CD₃CN): δ = 99.3 (d, *J*_{RhP}*=*197).

### Beispiel 7: Synthese von [Ir(S-^{Ph}tropp^{Ph})₂]OTf

Eine Lösung von [Ir₂(*µ*₂-Cl)₂(coe)₄] (coe = Cycloocten, 200 mg, 0.22 mmol) in 5 mL THF wurde tropfenweise zu einer Lösung von S^{-Ph}tropp^{Ph} (403 mg, 0.89 mmol) in 5 mL THF gegeben und die Mischung für eine Stunde gerührt. AgOTf (114 mg, 0.45 mmol) wurde zugegeben und weitere 5 Stunden gerührt. Die entstandene Suspension wurde gefiltert und das Filtrat bis zur Trockne eingeengt. Nach Umfällen aus Methylenchlorid und Hexane wurde das Produkt in Form tiefroter Kristalle erhalten (540 mg, Ausbeute: 97%).

³¹P-NMR (121.5 MHz, CD₂Cl₂):δ= 52.9 (s)

### Katalyseexperimente

### Beispiel 8: 1,4-Addition von PhB(OH)₂ an Cyclohex-2-enon

Eine Lösung von [Rh₂(*µ*₂-Cl)₂(C₂H₄)₄] (10 mg, 26 *µ*mol) und S-^{Ph}tropp^{Ph} (24 mg, 53 *µ*mol) in 1,4-Dioxan (3 mL) wurde für 15 min bei Raumtemperatur gerührt, anschließend mit KOH (0.3 mL einer 1. 7 M-Lösung, 0.5 mmol) versetzt und die Mischung weitere 5 min gerührt.

Zu der orangen Lösung wurde PhB(OH)₂ (370 mg, 3.0 mmol) und 5 min später Cyclohex-2-enon (103 mg, 1.0 mmol) zugegeben. Die Mischung wurde für 2 h bei 55°C gehalten und der Reaktionsverlauf per GC verfolgt (Kapillare HP-5: 90°C für 3 min, dann Aufheizen auf 180°C mit einer Heizrate von 3 °C min⁻¹; Flussrate 1.6 mL H₂ min⁻¹; Retentionszeiten 2.93 min. bzw. 18.6 min.). Unter diesen Bedingungen wurden folgende Ergebnisse erhalten:
5 mol% Katalysator: 86% Umsatz; 3 mol% Katalysator: 81% Umsatz; 1 mol% Katalysator: 51% Umsatz. Der Enantiomerenüberschuss (92 - 95 %) wurde per chiraler HPLC bestimmt (Chiralcel OD-H, n-Hexan : iPrOH = 98 : 2, Retentionszeiten: R: 26.3 min.; S: 31.3 min. Das gebildete Produkt hatte überwiegend *R*-Konfiguration.

### Beispiel 9: 1,4-Addition von PhB(OH)₂ an (1-Benzyl-pyrrol-2,5 dion)

Eine Lösung von [Rh₂(*µ*2-Cl)₂(C₂H₄)₄] (5 mg, 13 □mol) und S-^{Ph}tropp^{Ph} (13 mg, 28 *µ* mol) in 1,4-Dioxan (3 mL) wurde für 15 min bei Raumtemperatur gerührt, anschließend mit KOH (0.25 mL einer 1.0 M-Lösung, 0.5 mmol) versetzt und die Mischung weitere 5 min gerührt.

Zu der orangen Lösung wurden PhB(OH)₂ (185 mg, 1.5 mmol) und 5 min später (1-Benzyl-pyrrol-2,5-dion) (97 mg, 0.5 mmol) zugegeben. Die Mischung wurde für 2 h bei 55°C gehalten und der Reaktionsverlauf per GC verfolgt (Kapillare HP-5: 90°C für 3 min, dann Aufheizen auf 180°C mit einer Heizrate von 4 °C min⁻¹; Flussrate 1.6 mL H₂ min⁻¹; Retentionszeiten 23.1 min. bzw. 34.1 min.). Unter diesen Bedingungen wurden folgende Ergebnisse erhalten: Ausbeute 93%, der Enantiomerenüberschuss (79 %) wurde per chiraler HPLC bestimmt (Chiralcel OD-H, n-Hexan: iPrOH = 98 : 2, Retentionszeiten: R: 25.3 min.; S: 21.1 min. Das gebildete Produkt hatte überwiegend R-Konfiguration. Kompletter Umsatz wurde auf bei einem Katalysatoreinsatz von 0.1 % beobachtet.

### Beispiele 10-19: Hydrierungen von Substraten mit dem Katalysator [Ir(S-^{Ph}tropp^{Ph})₂]OTf (pH₂ ~ 2.5 und T = 298 K.

| Beispiel | Lösungsmittel | t [min] | S/C | Umsatz% | ee % |
|---|---|---|---|---|---|
| Hydrierungen von Itakonsäure | | | | | |
| 10 | MeOH | 120 | 200 | > 99 | 30 |
| 11 | THF | 120 | 200 | > 99 | 21 |
| 12 | MeOH | 120 | 4'000 | 74 % | 23 |
| Hydrierungen von 2-Methylensuccinsäuredimethylester | | | | | |
| 13 | CH₂Cl₂ | 60 | 4'000 | 90 | 60 |
| 14 | CH₂Cl₂ | 1200 | 10'000 | 85 | 60 |
| Hydrierungen von 2-Methylensuccinsäuredibutylester | | | | | |
| 15 | CH₂Cl₂ | 120 | 200 | >99 | 67 |
| 16 | CH₂Cl₂ | 120 | 2'000 | >99 | 58 |
| Hydrierungen von 2-Acetamidoacrylsäuremethylester | | | | | |
| 17 | CH₂Cl₂ | 120 | 100 | > 99 | 39 |
| 18 | CH₂Cl₂ | 120 | 4'000 | 23 | 39 |
| 19 | CH₂Cl₂ | 120 | 10'000 | 7 | 39 |

## Patentansprüche

1. Verbindungen der Formel (I) 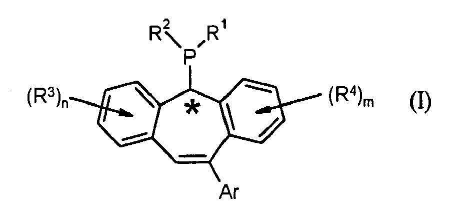 in der
R¹ und R² jeweils unabhängig voneinander für einen monovalenten Rest stehen der jeweils 1 bis 30-Kohlenstoffatome enthält oder
PR¹R² zusammen für einen 5 bis 9 gliedrigen heterocyclischen Rest steht, der insgesamt 2 bis 50 Kohlenstoffatome enthält und bis zu drei weitere Heteroatome enthalten kann, die ausgewählt sind aus der Gruppe Sauerstoff und Stickstoff und
n und m die Zahl der Substituenten am aromatischen Ring anzeigt, die von Wasserstoff verschieden sind und jeweils unabhängig voneinander stehen können für null, eins, zwei, drei oder vier,
R³ und R⁴ jeweils unabhängig ausgewählt sind aus der Gruppe
Fluor, Chlor, Brom, Iod, Nitro, freies oder geschütztes Formyl, C₁-C₁₂-Alkyl, C₁-C₁₂-Alkoxy, C₁-C₁₂-Halogenalkoxy, C₁-C₁₂-Halogenalkyl, C₅-C₁₄-Aryl, C₆-C₁₅-Arylalkyl oder Resten der Formel (II),
A-B-C-D (II)
in der unabhängig voneinander
A fehlt oder für einen Alkylenrest mit 1 bis 12 Kohlenstoffatomen oder einen Alkenylenrest mit 2 bis 12 Kohlenstoffatomen steht und
B fehlt oder für Sauerstoff, Schwefel oder NR⁵ steht,
wobei
R⁵ Wasserstoff, C₁-C₈-Alkyl, C₆-C₁₅-Arylalkyl oder C₅-C₁₄-Aryl bedeutet und
C für eine Carbonyl-Gruppe steht und
D für R⁶, OR⁶, NHR⁷ oder N(k⁷)₂ steht,
wobei
R⁶ für C₁-C₈-Alkyl, C₆-C₁₅-Arylalkyl oder C₅-C₁₄-Aryl und
R⁷ jeweils unabhängig für C₁-C₈-Alkyl, C₆-C₁₄-Arylalkyl oder C₅-C₁₄-Aryl oder N(R⁷)₂ zusammen für einen 5 oder 6 gliedrigen cyclischen Aminorest steht oder Resten der Formeln (IIIa-g)
A-D (IIIa) A-SO₂-D (IIIb) A-NR⁶-SO₂R⁶ (IIIc) A-S0₃Z (IIId) A-PO₃Z₂ (IIIe) A-COZ (IIIf) A-CN (IIIg)
in denen A, D und R⁶ die unter der Formel (II) angegebene Bedeutung besitzen und Z für Wasserstoff oder ein Metallionen-äquivalent steht
Ar für einen Arylrest steht und
* unabhängig von der oben gewählten Darstellung kennzeichnet, dass es sich um alle jeweils möglichen stereoisomerenangereicherten Verbindungen handelt.

2. Folgende Verbindungen nach Anspruch 1:
(S)- und (R)-10-Phenyl-5-diphenylphosphanyl-5*H* dibenzo[a,d]cyclohepten (S-^{Ph}tropp^{Ph}, R-^{Ph}tropp^{Ph}), (S)- und (R)-10-Phenyl-5-di(o-tolyl)phosphanyl-5*H*-dibenzo[a,d]cyclohepten (S-^{Ph}tropp^{o-Tol}, R-^{Ph}tropp^{o-Tol}), (S)- und (R)-10-Phenyl-5-di(m-tolyl)phosphanyl-5*H-*dibenzo[a,d]cyclohepten (S-^{Ph}tropp^{m-Tol} R-^{Ph}tropp^{m-Tol}) und (S)- und (R)-10-Phenyl-5-di(p-tolyl)phosphanyl-5*H*-dibenzo[a,d]cyclohepten (S-^{Ph}tropp^{p-Tol} R-^{Ph}tropp^{p-Tol}) wobei (S)- und (R)-10-Phenyl-5-diphenylphosphanyl-5*H*-dibenzo[a,d]cyclohepten (S-^{Ph}tropp^{Ph}, R-^{Ph}tropp^{Ph}) noch weiter bevorzugt sind.

3. Verfahren zur Herstellung von Verbindungen nach Anspruch 1, **dadurch gekennzeichnet, dass**
• in einem Schritt a)
Verbindungen der Formel (IV) 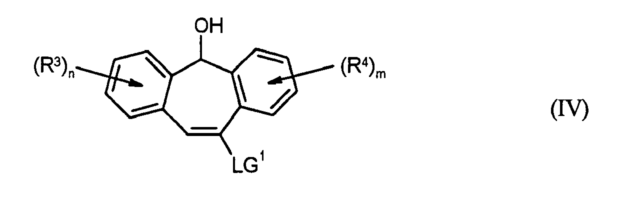 in der R³ und R⁴ sowie n und m die in Anspruch 1 genannte Bedeutung besitzen und
LG¹ für Halogen, Perfluorcarboxyl oder ein organisches Sulfonat steht
mit Verbindungen der Formel (V)
Ar-LG² (V)
in der Ar die in Anspruch 1 genannter Bedeutung besitzt und LG² für Halogen, Perfluorcarboxyl, B(OH)₂ oder ein organisches Sulfonat steht in Gegenwart von Katalysator in Verbindungen der Formel (VI) überführt werden 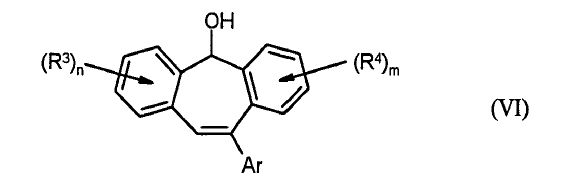
• in einem Schritt b) die Verbindungen der Formel (VI) durch Umsetzung mit Verbindungen der Formel (VII)
R¹R²PHal (VII)
in der R¹ und R² die in Anspruch 1 angegebene Bedeutung besitzen und Hal für Chlor, Brom oder Iod, bevorzugt für Chlor steht
in Gegenwart von Säure zu Verbindungen der Formel (VIII) umgesetzt werden 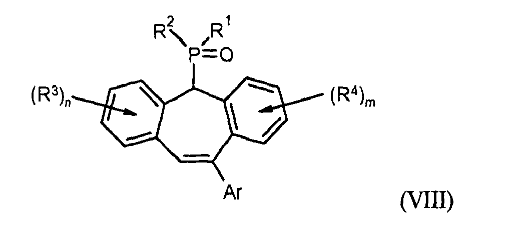
• in einem Schritt c) die Verbindungen der Formel (VIII) durch Chromatographie in stereoisomerenangereichterte Verbindungen der Formel (VIII) überführt werden und
• in einem Schritt d) die stereoisomerenangereichterten Verbindungen der Formel (VIII) durch Reduktion in Verbindungen der Formel (I) überführt werden.

4. Verwendung von Verbindungen nach Anspruch 1 oder 2 zur Anwendung als Liganden in asymmetrischen katalytischen Prozessen.

5. Verfahren zur Herstellung stereoisomerenangereicherter chiraler Verbindungen, **dadurch gekennzeichnet**, das es in Gegenwart von Verbindungen der Formel (I) gemäß Anspruch 1 oder 2 durchgeführt wird.

6. Übergangsmetallkomplexe enthaltend Verbindungen gemäß Anspruch 1 oder 2.

7. Folgende Übergangsmetallkomplexe gemäß Anspruch 6:
*S,S-* und *R*,*R*-[Ir(^{Ph}tropp^{Ph})₂]OTf, *S*- und *R*-[Rh(cod)(^{Ph}tropp^{Ph})]OTf, *S-* und *R-[* Rh(MeCN)₂(^{Ph}tropp^{Ph})]PF₆ *und S-* und *R*-[RhCl(MeCN)-(^{Ph}tropp^{Ph})].

8. Katalysatoren enthaltend Übergangsmetallkomplexe gemäß Anspruch 6 oder 7.

9. Verwendung von Katalysatoren gemäß Anspruch 8 in einem Verfahren zur Herstellung von stereoisomerenangereicherten Verbindungen.
